# EUROPÄISCHE PATENTSCHRIFT

(11) **EP 2 851 297 B1**
(45) Veröffentlichungstag und Bekanntmachung des Hinweises auf die Patenterteilung: **07.11.2018**
(21) Anmeldenummer: 14190707.1
(22) Anmeldetag: 17.05.2011
(51) Int. Cl.: B64D 13/02, F16K 1/22, F16K 39/02

(54) **Ventil zur Steuerung des Innendrucks in einer Kabine eines Luftfahrzeugs**
Valve for controlling the internal pressure in a cabin of an aircraft
Soupape de commande de la pression interne dans un habitacle d'un aéronef

(30) Priorität: 09.08.2010 DE 102010033827
(43) Veröffentlichungstag der Anmeldung: 25.03.2015
(62) Teilanmeldung aus: 11720103.8
(73) Patentinhaber: Nord-Micro AG & Co. OHG, 60388 Frankfurt (DE)
(72) Erfinder: Steinert, Martin, 63500 Seligenstadt (DE); Springer, Axel, 63500 Seligenstadt (DE)
(74) Vertreter: Flügel Preissner Schober Seidel

(56) Entgegenhaltungen:
- WO-A1-2005/023649
- DE-A1-102007 036 999
- US-A1- 2007 089 746
- US-A1- 2010 096 503
- US-B1- 6 273 136

## Beschreibung

Die vorliegende Erfindung betrifft ein Ventil zur Steuerung des Innendrucks in einer Kabine eines Luftfahrzeugs, mit einer ersten Klappe und einer zweiten Klappe, wobei die Klappen einen den Druck verändernden Fluidstrom zwischen der Umgebung und der Kabine durch eine Öffnung eines Begrenzungselements der Kabine steuern.

Derartige Ventile werden zur Steuerung des Drucks innerhalb einer Flugzeugkabine oder einer Druckkammer verwendet. Zur Steuerung des Drucks in einer Flugzeugkabine ist das Ventil in einer Öffnung des Flugzeugrumpfes eingebracht. Je nach Stellung des Ventils kann Luft ein- oder ausströmen. Somit kann mit Hilfe des Ventils der Druck in der Kabine erhöht oder abgebaut werden. Zudem kann die in der Flugzeugkabine befindliche verbrauchte Luft über das Ventil abgelassen werden.

Aus der DE 10 2008 040 184 A1 geht ein Ventil hervor, das zwei verstellbare Klappen aufweist. Je nach Stellung der Klappen strömt entweder Luft aus der Flugzeugkabine heraus oder hinein. Nachteilig hierbei ist jedoch, dass in der Einströmstellung der Klappen hinter der Klappe Luftverwirbelungen entstehen, die einen Teil der einströmenden Luft wieder aus dem Inneren der Flugzeugkabine saugen.

In der US 6,273,136 wird ein Ausströmventil offenbart, das eine erste und eine zweite Klappe aufweist. Dabei ist an der zweiten Klappe eine Öffnung vorgesehen, die durch die erste Klappe verschließbar ist. Die beiden Klappen sind an einem gemeinsamen Drehlager gelagert.

DE 10 2007 036 999 A1 offenbart ein Ausströmventil für ein Luftfahrzeug, bei welchem Klappen des Ausströmventils mit Vorsprüngen zur Reduktion der Geräuschentwicklung versehen sind.
Die **Aufgabe** der vorliegenden Erfindung besteht darin, ein Ventil der eingangs genannten Art derart weiterzubilden, dass in der Einströmstellung der Klappen ein Ausströmen der Luft verhindert wird.
Zur **Lösung** der Aufgabe wird bei einem Ventil der eingangs genannten Art vorgeschlagen, bei dem eine Verschlusseinrichtung vorgesehen ist, die in der Einströmstellung der Klappen einen Bereich zwischen der ersten Klappe und der zweiten Klappe reduziert oder verschließt, der durch die Klappen begrenzt wird, wobei mindestens eine der Klappen längenveränderlich ausgebildet ist. Ein solches Ventil wird in Anspruch 1 definiert. Zur **Lösung** der Aufgabe wird ferner bei einem Ventil der eingangs genannten Art vorgeschlagen, bei dem eine Verschlusseinrichtung vorgesehen ist, die in der Einströmstellung der Klappen einen Bereich zwischen der ersten Klappe und der zweiten Klappe verschließt, der durch die Klappen begrenzt wird, wobei die erste Klappe an einer Schwenkeinrichtung angeordnet ist, die schwenkbeweglich in dem Rahmen des Ventils gelagert ist, und wobei in der Einströmstellung der Klappen die erste Klappe an der zweiten Platte anliegt, um den Ausströmbereich zu verschließen. Ein solches Ventil wird in Anspruch 2 definiert. Das erfindungsgemäße Ventil zeichnet sich dadurch aus, dass die Menge der in die Kabine einströmenden Luft erhöht wird. Dies wird dadurch erreicht, dass in der Einströmstellung der Klappen der Ausströmbereich zwischen den Platten reduziert oder verschlossen wird.

Vorteilhafterweise weist die Schwenkeinrichtung zwei an dem Rahmen schwenkbeweglich gelagerte Tragarme auf. Hierdurch wird eine kostengünstige Schwenkeinrichtung zur Verfügung gestellt.

Vorteilhaft sind die erste Klappe an einem freien Ende der Schwenkeinrichtung an einem ersten Lager und die zweite Klappe an einem zweiten Lager angeordnet.
Die längenveränderliche Klappe kann dazu verwendet werden, um ein Ausströmen der zuvor eingeströmten Luft zu reduzieren oder zu verhindern. Ferner kann mittels der längenveränderlichen Klappe die Anströmfläche vergrößert werden.

In einer weiteren vorteilhaften Ausgestaltung ist eine Stelleinrichtung vorgesehen, mit der die Klappen und/oder Schwenkeinrichtung in eine Ausström- und eine Einströmstellung verstellbar sind. Durch die Stelleinrichtung kann das erfindungsgemäße Ventil sowohl als Einströmventil auch als Ausströmventil fungieren. In der Ausströmstellung kann die in der Flugzeugkabine befindliche Luft abgelassen werden. In der Einströmstellung kann Stauluft/Frischluft der Flugzeugkabine zugeführt werden. Folglich übernimmt das erfindungsgemäße Ventil die Funktion von bisher zwei separaten Systemen. Dadurch kann Gewicht eingespart und die Kosten reduziert werden.

Vorteilhaft sind über die Stelleinrichtung die Klappen und/oder Schwenkeinrichtung gegenläufig und/oder gleichläufig verstellbar. Die gegenläufige Verstellbarkeit ermöglicht, dass die erste Klappe und/oder die Schwenkeinrichtung in die Einströmstellung schwenkt, während die zweite Klappe gegenläufig zu der ersten Klappe und/oder der Schwenkeinrichtung schwenkt.

Bei einer vorteilhaften Ausgestaltung kann die erste Klappe mit Abstand zu einer Vorderkante des Rahmens und die zweite Klappe an einer Hinterkante des Rahmens gelagert werden.

Nachfolgend wird die Erfindung anhand von Ausführungsbeispielen näher beschrieben, die in der Zeichnung schematisch dargestellt sind. Hierbei zeigen:
- Fig. 1: einen Querschnitt Ventils;
- Fig. 2: einen Querschnitt einer Ausführungsform des erfindungsgemäßen Ventils;
- Fig. 3: einen Querschnitt einer weiteren Ausgestaltung eines Ventils;
- Fig. 4: einen Querschnitt einer weiteren Ausführungsform des erfindungsgemäßen Ventils;
- Fig. 5: einen Querschnitt einer weiteren Ausführungsform des erfindungsgemäßen Ventils;
- Fig. 6: einen Querschnitt einer weiteren Ausgestaltung eines Ventils und
- Fig. 7: eine perspektivische Ansicht einer Verschlussklappe des Ventils gemäß der sechsten Ausführungsform.

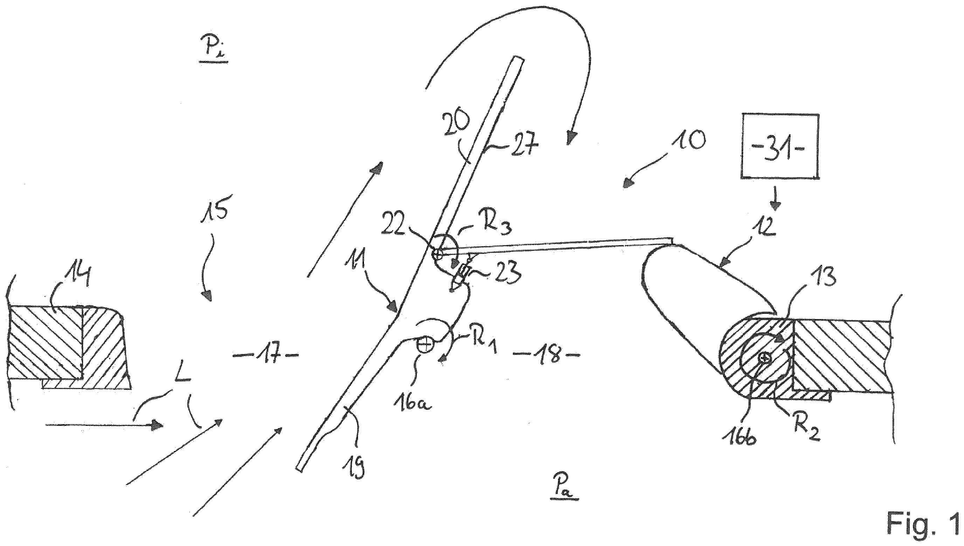

Fig. 1 zeigt ein Ventil 10 zur Steuerung eines Innendrucks pᵢ in einer Kabine eines Flugzeugs. Das Ventil 10 weist eine erste Klappe 11 (ground gate) und eine zweite Klappe 12 (control gate) auf. Beide Klappen 11, 12 sind in einem Rahmen 13 mittels Lagern 16a, 16b beweglich angeordnet. Der Rahmen 13 des Ventils 10 ist in einem Begrenzungselement 14 des Flugzeuges, vorliegend im Flugzeugrumpf, eingesetzt.

Durch den Rahmen (13) wird eine Öffnung (15) begrenzt, über die Luft in die Kabine ein- und ausströmen kann.
Beide Klappen 11, 12 sind über eine schematisch dargestellte Stelleinrichtung 31 verbunden. Hierdurch können die Klappen 11, 12 um die Lager 16a, 16b geschwenkt werden.
Die erste Klappe 11 ist exzentrisch gelagert und weist einen ersten Abschnitt 19 und einen zweiten Abschnitt 20 auf. Der erste Abschnitt 19 ist gegenüber dem zweiten Abschnitt 20 abgewinkelt, wodurch ein verbesserter Lufteinlass erzielt wird. Der Querschnitt des ersten Abschnittes 19 verjüngt sich in Richtung des freien Endes.
An einer Rückseite 27 der ersten Klappe 11 ist eine Verschlusseinrichtung 21 angeordnet. Die Verschlusseinrichtung 21 ist im vorliegenden Beispiel als Verschlussklappe ausgebildet, die über ein Lager 22 schwenkbar mit der ersten Klappe 11 gekoppelt ist. Die Verschlusseinrichtung 21 ist mit einem schematisch dargestellten ersten Stellglied 23 verbunden, mittels dem die Verschlusseinrichtung 21 geschwenkt werden kann.
Zum Einströmen der Luft schwenken die Klappen 11, 12 in die in Fig. 1 gezeigte Einströmstellung. Die erste Klappe 11 schwenkt dabei in Richtung R₁ und die zweite Klappe in Richtung R₂. Hierdurch wird ein Einströmbereich 17 gebildet. Über den Einströmbereich 17 erfolgt ein Einströmen des Luftstroms L. Da sich hinter der ersten Klappe 11 starke Luftverwirbelungen bilden, die den statischen Außendruck absenken, würde ein Teil der eingeströmten Luft wieder durch einen Ausströmbereich 18 herausströmen. Um dies zu verhindern, wird die Verschlusseinrichtung 21 mittels des ersten Stellglieds 23 in Richtung R₃ der zweiten Klappe 12 geschwenkt. Weiterhin wird die zweite Klappe 12 gegenläufig zu der in Fig. 1 gezeigten Bewegungsrichtung R₂ der zweiten Klappe 11 geschwenkt. Dadurch liegt die Verschlusseinrichtung 21 an der zweiten Klappe 12 an und verschließt den Ausströmbereich 18. Somit wird ein Ausströmen der zuvor eingeströmten Luft verhindert. Die gegenläufige Bewegung der beiden Klappen 11, 12 wird durch das schematisch dargestellte Stellglied 31 ermöglicht.
Zum Ausströmen der Luft aus der Flugzeugkabine in die Umgebung schwenken die Klappen 11, 12 in eine nicht dargestellte Ausströmstellung. Hierbei schwenkt die erste Klappe 11 derart in Richtung R₁, dass das freie Ende des ersten Abschnitts 19 in den Ausströmbereich 18 zeigt. Die zweite Klappe 12 schwenkt in Richtung R₂. Zwischen der ersten Klappe 11 und der zweiten Klappe 12 strömt die Luft über den Ausströmbereich 18 in die Umgebung. Die Verschlusseinrichtung 21 liegt während des Ausströmvorgangs an der Rückseite 27 der ersten Klappe 11 an, um so das Ausströmen der Luft nicht zu behindern.
In einer nicht dargestellten Schließstellung des Ventils 10 berühren sich die beiden Klappen 11, 12, wobei das freie Ende des ersten Abschnitts 19 an einem freien Ende der zweiten Klappe 12 anliegt. In der Schließstellung liegt die Verschlusseinrichtung 21 an der Rückseite 27 der ersten Klappe 11 an.

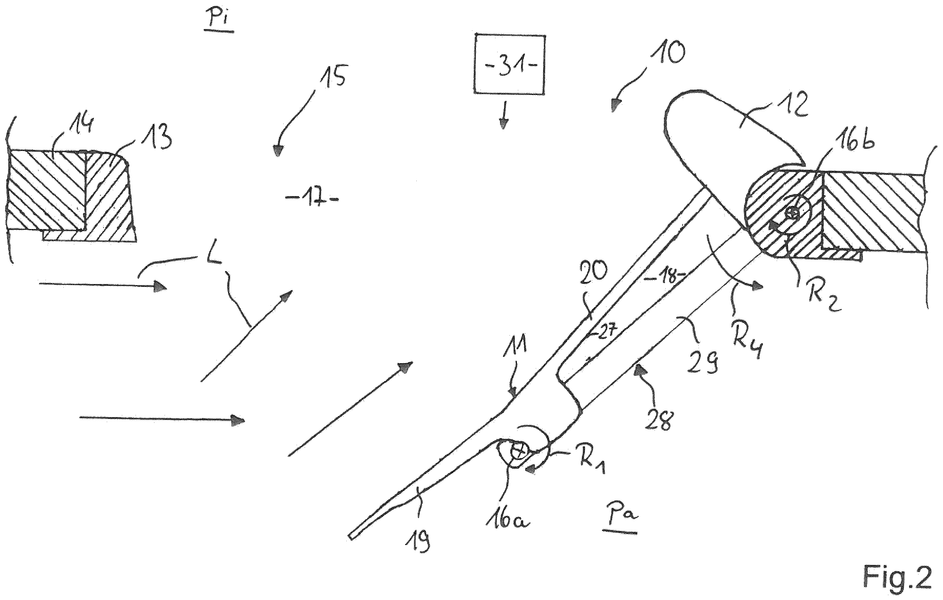

In Fig. 2 ist eine Ausführungsform des Ventils 10 gezeigt, zu deren Beschreibung die zuvor eingeführten Bezugszeichen für gleiche oder funktionsgleiche Teile verwendet werden. Bei dieser Ausführungsform ist die erste Klappe 11 mit einer Schwenkeinrichtung 28 verbunden. Die Schwenkeinrichtung 28 weist zwei Tragarme 29 auf, die an dem Lager 16b im Rahmen 13 des Ventils 10 schwenkbar gelagert sind. Am freien Ende der Schwenkeinrichtung 28 ist die erste Klappe 11 schwenkbar an dem Lager 16a angeordnet. Die Schwenkeinrichtung 28 und die Klappen 11, 12 sind mit der schematisch dargestellten Stelleinrichtung 31 verbunden. Hierdurch können die Klappen 11, 12 und die Schwenkeinrichtung 28 um die Lager 16a, 16b geschwenkt werden.

Zum Einströmen der Luft schwenken die Klappen 11, 12 und die Schwenkeinrichtung 28 in die in Fig. 2 gezeigte Stellung. Die erste Klappe 11 schwenkt dabei in Richtung R₁, die zweite Klappe 12 in Richtung R₂ und die Schwenkeinrichtung 28 in Richtung R₄. Dadurch wird der Einströmbereich 17 innerhalb der Öffnung 15 gebildet. Über den Einströmbereich 17 erfolgt ein Einströmen des Luftstroms. Die Schwenkeinrichtung 28, die erste Klappe 11 und die zweite Klappe 12 werden derart geschwenkt, dass die erste Klappe 11 annähernd an der zweiten Klappe 12 anliegt, um so den Ausströmbereich 18 zu verschließen.
Durch die Schwenkeinrichtung 28 kann die erste Klappe 11 weiter in den Luftstrom (L) eingefahren werden, so dass die erste Klappe 11 großflächiger angeströmt wird. Somit wird die Lufteinströmmenge und der Wirkungsgrad erhöht.
Zum Ausströmen der Luft aus der Flugzeugkabine in die Umgebung schwenken die Klappen 11, 12 in eine nicht dargestellte Ausströmstellung. Die Schwenkeinrichtung 28 liegt während des Ausströmvorgangs an dem Rahmen 13 an. Die erste Klappe 11 schwenkt zum Ausströmen der Luft derart in Richtung R₁, dass das freie Ende des ersten Abschnitts 19 in den Ausströmbereich 18 zeigt. Die zweite Klappe 12 schwenkt in Richtung R₂. Zwischen der ersten Klappe 11 und der zweiten Klappe 12 strömt die Luft über den Ausströmbereich 18 in die Umgebung. Die Schwenkeinrichtung 28 liegt während des Ausströmvorgangs an dem Rahmen 13 an.
In einer nicht dargestellten Schließstellung des Ventils 10 berühren sich die beiden Klappen 11, 12, wobei das freie Ende des ersten Abschnitts 19 an einem freien Ende der zweiten Klappe 12 anliegt. In der Schließstellung liegt die Schwenkeinrichtung 28 an dem Rahmen 13 an.

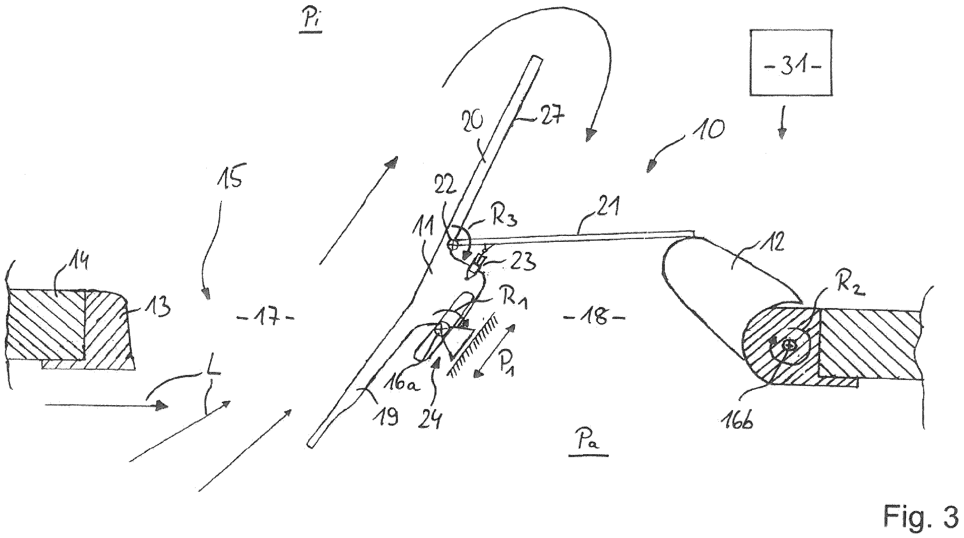

In Fig. 3 ist eine weitere Ausgestaltung des Ventils 10 gezeigt, zu deren Beschreibung die zuvor eingeführten Bezugszeichen für gleiche oder funktionsgleiche Teile verwendet werden. Bei dieser Ausgestaltung ist die erste Klappe 11 über ein schematisch dargestelltes Lager 24 verschiebbar gelagert. Mittels eines nicht dargestellten Stellglieds kann die erste Klappe 11 in Richtung des Pfeils P₁ verschoben werden. Dadurch kann die erste Klappe 11 in die Grenzschicht der Flugzeugumströmung gefahren werden, so dass die Anströmfläche vergrößert und die Menge an einströmender Luft erhöht wird.

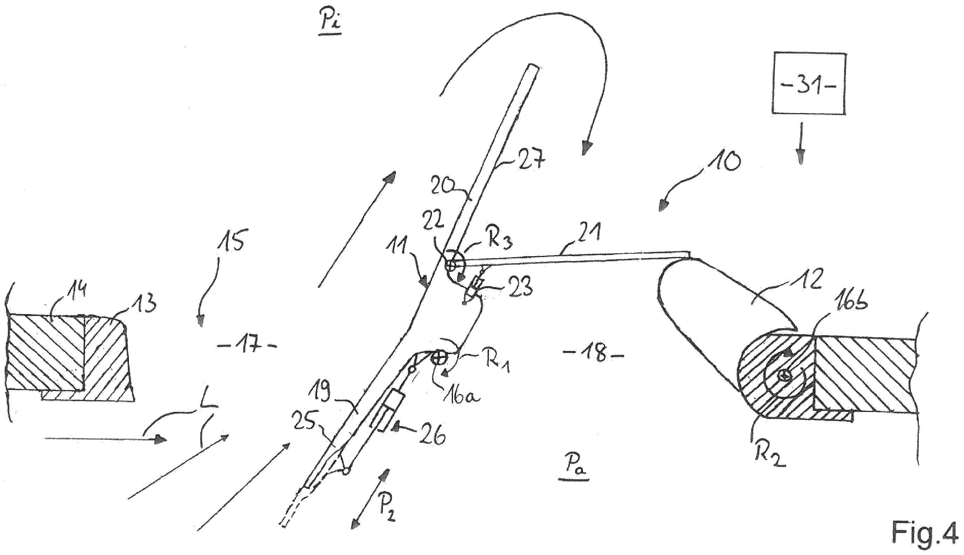

In Fig. 4 ist eine weitere Ausführungsform des Ventils 10 gezeigt, zu deren Beschreibung die zuvor eingeführten Bezugszeichen für gleiche oder funktionsgleiche Teile verwendet werden. Bei dieser Ausführungsform ist an dem ersten Abschnitt 19 der ersten Klappe 11 ein ausfahrbarer Spoiler 25 angeordnet ist. Der Spoiler 25 ist über ein schematisch dargestelltes zweites Stellglied 26 in Richtung des Pfeils P₂ verschiebbar. In Fig. 3 ist der Spoiler 25 im ausgefahrenem Zustand gestrichelt dargestellt. Durch Ausfahren des Spoilers 25 in die Grenzschicht der Flugzeugumströmung wird die Anströmfläche vergrößert. Hierdurch kann eine größere Luftmenge in die Kabine einströmen.

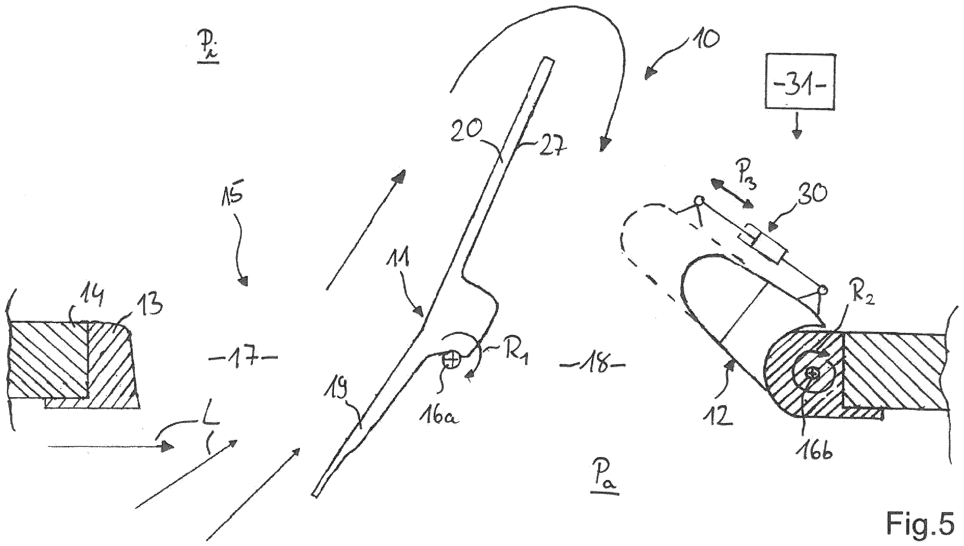

Fig. 5 zeigt eine weitere Ausführungsform des Ventils 10, zu deren Beschreibung die zuvor eingeführten Bezugszeichen für gleiche oder funktionsgleiche Teile verwendet werden. Bei dieser Ausführungsform ist die zweite Klappe 12 längenveränderlich ausgebildet. Die zweite Klappe 12 ist über ein schematisch dargestelltes drittes Stellglied 30 in Richtung des Pfeils P₃ verschiebbar. Hierdurch kann der Ausströmbereich 18 reduziert oder vollständig verschlossen werden, um so ein Ausströmen der eingeströmten Luft zu reduzieren oder zu verhindern.

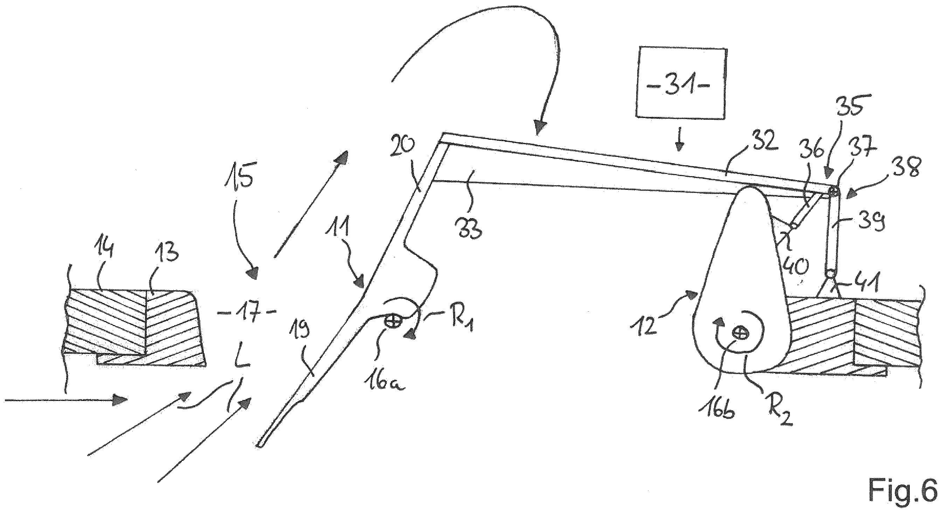

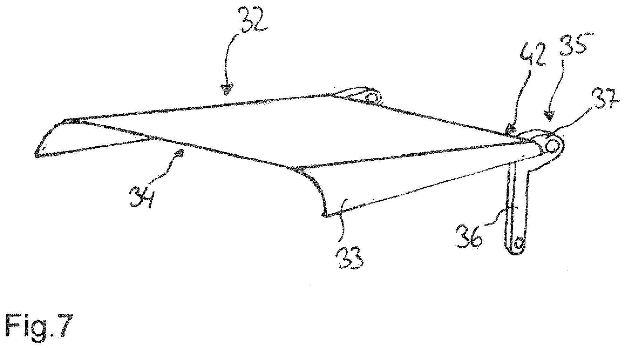

In den Fig. 6 und 7 ist eine weitere Ausgestaltung des Ventils dargestellt, zu deren Beschreibung die zuvor eingeführten Bezugszeichen für gleiche oder funktionsgleiche Teile verwendet werden. Das Ventil 10 gemäß dieser Ausgestaltung weist als Verschlusseinrichtung 21 eine an dem Rahmen 13 schwenkbeweglich gelagerte Verschlussklappe 32 auf, die in Fig. 6 gezeigt ist.

Wie in Fig. 7 dargestellt ist, weist die Verschlussklappe 32 an ihren Längsrändern gebogene Randbereiche 33 auf, wobei die Randbereiche 33 von einer Stirnseite 34 der Verschlussklappe 32 mit abnehmender Breite nach hinten verlaufen. In der Einströmstellung der Klappen 11, 12 liegen die Randbereiche 33 der Verschlussklappe 32 an dem Rahmen 13 des Ventils 10 an.

Des Weiteren weist die Verschlussklappe 32 an ihrer Hinterkante 42 Koppelglieder 35 auf. Die Koppelglieder 35 weisen einen ersten Lagerabschnitt 36 und einen zweiten Lagerabschnitt 37 auf. Der erste Lagerabschnitt 36 ist als starre Stange und der zweite Lagerabschnitt 37 mit einer Bohrung ausgebildet.

Wie in Fig. 6 gezeigt ist, ist die Verschlussklappe 32 über die Koppelglieder 35 mit einem Gelenkmechanismus 38 verbunden, der die Verschlussklappe 32 mit der zweiten Klappe 12 und dem Rahmen 13 schwenkbar verbindet. Hierzu umfasst der Gelenkmechanismus 38 eine Stange 39, einen ersten Koppelbschnitt 40 und einen zweiten Koppelabschnitt 41. Der erste Koppelabschnitt 40 ist an der zweiten Klappe 12 angeordnet und mit dem ersten Lagerabschnitt 36 verbunden. Der zweite Koppelabschnitt 41 ist an dem Rahmen 13 angebracht und über die Stange 39 mit dem zweiten Lagerabschnitt 37 verbunden.

Zum Einströmen der Luft schwenken die Klappen 11, 12 in die in Fig. 6 gezeigte Einströmstellung. Hierbei verschwenkt die erste Klappe 11 in Richtung R₁. Die zweite Klappe 12 und die Verschlussklappe 32 verschwenken in Richtung R₂. Ab einem bestimmten Verschwenkwinkel der zweiten Klappe 12 verschwenkt die Verschlussklappe 32 auf Grund des Gelenkmechanismus 38 jedoch in eine entgegen gesetzte Richtung zu R₂, bis die Verschlussklappe 32 in der in Fig. 6 gezeigten Einströmstellung an den Oberkanten der Klappen 11, 12 anliegt. Somit verschließt die Verschlussklappe 32 einen Bereich zwischen den beiden Klappen 11, 12, wodurch ein Ausströmen der zuvor über den Einströmbereich 17 eingeströmten Luft verhindert wird. Die Bewegung der Klappen 11, 12 und der Verschlussklappe 32 wird durch das schematisch dargestellte Stellglied 31 bewirkt.
Da die Verschlussklappe 32 über den Gelenkmechanismus 38 mit der zweiten Klappe 12 gekoppelt ist, wird kein separates Stellglied zum Verschwenken der Verschlussklappe 32 benötigt.
Es ist auch möglich, die Ausführungsformen gemäß den Fig. 2 und 3 miteinander zu kombinieren. Des Weiteren können die Ausführungsformen gemäß den Fig. 2 und 5 mit einem verschiebbaren Lager 24 und/oder einem ausfahrbaren Spoiler 25 versehen werden. Darüber hinaus kann die Ausführungsform gemäß Fig. 5 zusätzlich mit einer Verschlusseinrichtung 21 versehen werden. Ferner kann die Ausgestaltung gemäß Fig. 6 mit einem verschiebbaren Lager 24 und/oder einem ausfahrbaren Spoiler 25 und/oder einer Schwenkeinrichtung 28 versehen werden.
Bei der Stelleinrichtung 31 handelt es sich um eine schematisch dargestellte Einrichtung. Jegliche Art an geeigneter Stelleinrichtung kann vorliegend verwendet werden, wie beispielsweise eine über einen Motor angetriebene Kinematik.
Bei den Stellgliedern 23, 26, 30 handelt es sich um schematisch dargestellte Teile. Jegliche Art an geeigneten Stellgliedern kann vorliegend verwendet werden.
Ferner kann vorliegend jegliche Art an geeigneter Schwenkeinrichtung 28 verwendet werden, wie beispielsweise einen Rahmen, der an dem Lager 16b im Rahmen 13 des Ventils 10 schwenkbar gelagert ist.

Das erfindungsgemäße Ventil 10 zeichnet sich dadurch aus, dass die Lufteinströmmenge in die Kabine erhöht wird. So kann beispielsweise bei Ausfall der Klimaanlage die Zufuhr von Frischluft zur Kabine sichergestellt werden, da die einströmende Luft in ausreichender Menge zur Verfügung gestellt wird. Des Weiteren kann in der Ausströmstellung der Klappen 11, 12 Luft aus der Flugzeugkabine abgelassen werden. Folglich kann das erfindungsgemäße Ventil 10 als kombiniertes Einström- und Ausströmventil fungieren.

**Bezugszeichenliste**

| | | | |
|---|---|---|---|
| 10 | Ventil | 37 | zweiter Lagerabschnitt |
| 11 | erste Klappe | 38 | Gelenkmechanismus |
| 12 | zweite Klappe | 39 | Stange |
| 13 | Rahmen | 40 | erster Koppelabschnitt |
| 14 | Begrenzungselement | 41 | zweiter Koppelabschnitt |
| 15 | Öffnung | 42 | Hinterkante |
| 16a | Lager | | |
| 16b | Lager | | |
| 17 | Einströmbereich | L | Luftstrom |
| 18 | Ausströmbereich | R₁ | Bewegungsrichtung |
| 19 | ersten Abschnitt | R₂ | Bewegungsrichtung |
| 20 | zweiter Abschnitt | R₃ | Bewegungsrichtung |
| 21 | Verschlusseinrichtung | R₄ | Bewegungsrichtung |
| 22 | Lager | P₁ | Verschieberichtung |
| 23 | erstes Stellglied | P₂ | Verschieberichtung |
| 24 | verschiebbares Lager | P₃ | Verschieberichtung |
| 25 | Spoiler | pᵢ | Innendruck |
| 26 | zweites Stellglied | pₐ | Aussendruck |
| 27 | Rückseite | | |
| 28 | Schwenkeinrichtung | | |
| 29 | Tragarm | | |
| 30 | drittes Stellglied | | |
| 31 | Stelleinrichtung | | |
| 32 | Verschlussklappe | | |
| 33 | gebogener Randbereich | | |
| 34 | Stirnseite | | |
| 35 | Koppelglieder | | |
| 36 | erster Lagerabschnitt | | |

## Patentansprüche

1. Ventil (10) zur Steuerung des Innendrucks pᵢ in einer Kabine eines Luftfahrzeugs, mit einer ersten Klappe (11) und einer zweiten Klappe (12), wobei die Klappen (11, 12) einen den Druck verändernden Fluidstrom (L) zwischen der Umgebung und der Kabine durch eine Öffnung (15) des Ventils (10) steuern, wobei eine Verschlusseinrichtung vorgesehen ist, die in der Einströmstellung der Klappen (11,12) einen Bereich (18) zwischen der ersten Klappe (11) und der zweiten Klappe (12) reduziert oder verschließt, der durch die Klappen (11,12) begrenzt wird, **dadurch gekennzeichnet, dass** mindestens eine der Klappen (11, 12) längenveränderlich ausgebildet ist, um ein Ausströmen der eingeströmten Luft zu reduzieren.

2. Ventil (10) zur Steuerung des Innendrucks pᵢ in einer Kabine eines Luftfahrzeugs, mit einer ersten Klappe (11) und einer zweiten Klappe (12), wobei die Klappen (11, 12) einen den Druck verändernden Fluidstrom (L) zwischen der Umgebung und der Kabine durch eine Öffnung (15) des Ventils (10) steuern, wobei eine Verschlusseinrichtung vorgesehen ist, die in der Einströmstellung der Klappen (11,12) einen Bereich (18) zwischen der ersten Klappe (11) und der zweiten Klappe (12) verschließt, der durch die Klappen (11,12) begrenzt wird, **dadurch gekennzeichnet, dass** die erste Klappe (11) an einer Schwenkeinrichtung (28) angeordnet ist, die schwenkbeweglich in dem Rahmen (13) des Ventils (10) gelagert ist, wobei in der Einströmstellung der Klappen (11,12) die erste Klappe (11) an der zweiten Klappe (12) anliegt, um den Bereich (18) zu verschließen.

3. Ventil nach Anspruch 2, **dadurch gekennzeichnet, dass** die Schwenkeinrichtung (28) zwei an dem Rahmen (13) schwenkbeweglich gelagerte Tragarme (29) aufweist.

4. Ventil nach Anspruch 2 oder 3, **dadurch gekennzeichnet, dass** die erste Klappe (11) an einem freien Ende der Schwenkeinrichtung (28) an einem ersten Lager (16a) und die zweite Klappe (12) an einem zweiten Lager (16b) angeordnet ist.

5. Ventil nach einem der vorhergehenden Ansprüche, **dadurch gekennzeichnet, dass** eine Stelleinrichtung (31) vorgesehen ist mit der die Klappen (11, 12) und/oder die Schwenkeinrichtung (28) in eine Ausström- und eine Einströmstellung verstellbar sind.

6. Ventil nach einem der vorhergehenden Ansprüche , **dadurch gekennzeichnet, dass** über die Stelleinrichtung (31) die Klappen (11, 12) und/oder die Schwenkeinrichtung (28) gegenläufig und/oder gleichläufig verstellbar sind.

7. Ventil nach Anspruch 1, **dadurch gekennzeichnet, dass** die zweite Klappe (12) über ein Stellglied (30) verschiebbar ist.

8. Ventil nach Anspruch 1, **dadurch gekennzeichnet, dass** die erste Klappe (11) mit Abstand zu einer Vorderkante eines Rahmens (13) und die zweite Klappe (12) an einer Hinterkante des Rahmens (13) gelagert ist.

## Claims

1. Valve (10) for controlling the internal pressure pᵢ in a cabin of an aircraft, having a first flap (11) and a second flap (12), the flaps (11, 12) controlling a pressure changing fluid flow (L) between the environment and the cabin through an opening (15) of the valve (10), wherein a closing device is provided which, in the inflow position of the flaps (11, 12), reduces or closes a region (18) between the first flap (11) and the second flap (12) which is limited by the flaps (11, 12), **characterised in that** at least one of the flaps (11, 12) is of variable length so as to reduce an outflow of the inflow air.

2. Valve (10) for controlling the internal pressure pᵢ in a cabin of an aircraft, having a first flap (11) and a second flap (12), the flaps (11, 12) controlling a pressure changing fluid flow (L) between the environment and the cabin through an opening (15) of the valve (10), wherein a closing device is provided which, in the inflow position of the flaps (11, 12), reduces or closes a region (18) between the first flap (11) and the second flap (12) which is limited by the flaps (11, 12), **characterised in that** the first flap (11) is arranged at a pivoting mechanism which is mounted in a pivotable manner in the frame (13) of the valve (10), wherein in the inflow position of the flaps (11, 12) the first flap (11) abuts the second flap (12) so as to close the region (18).

3. Valve according to claim 2, **characterized in that** the pivoting device (28) has two support arms (29) mounted on the frame (13) in a pivotable manner.

4. Valve according to claim 2 or 3, **characterized in that** the first flap (11) is arranged at a free end of the pivoting device (28) on a first bearing (16a) and the second flap (12) on a second bearing (16b).

5. Valve according to one of the preceding claims, **characterized in that** an adjusting device (31) is provided by means of which the flaps (11, 12) and/or the pivoting device (28) can be set into an outflow and an inflow position.

6. Valve according to one of the preceding claims, **characterized in that** the flaps (11, 12) and/or the pivoting device (28) are adjustable in opposite and/or in the same direction by means of the adjusting device (31).

7. Valve according to claim 1, **characterized in that** the second flap (12) is displaceable by means of an actuator (30).

8. The valve according to claim 1, **characterized in that** the first flap (11) is mounted at a distance from a front edge of a frame (13) and the second flap (12) is mounted at a rear edge of the frame (13).

## Revendications

1. Soupape (10) de commande de la pression interne pᵢ dans une cabine d'un aéronef, comportant un premier clapet (11) et un second clapet (12), les clapets (11, 12) commandant un courant de fluide (L), modifiant la pression, entre l'environnement et une cabine par une ouverture (15) de la soupape (10),
dans laquelle
il est prévu un moyen d'obturation qui, dans la position d'écoulement entrant des clapets (11, 12), réduit ou referme une zone (18) entre le premier clapet (11) et le second clapet (12), qui est délimitée par les clapets (11, 12),
**caractérisée en ce que**
l'un au moins des clapets (11, 12) est réalisé de façon variable en longueur pour réduire un écoulement sortant de l'air entré.

2. Soupape (10) de commande de la pression interne pᵢ dans une cabine d'un aéronef, comportant un premier clapet (11) et un second clapet (12), les clapets (11, 12) commandant un courant de fluide (L), modifiant la pression, entre l'environnement et la cabine par une ouverture (15) de la soupape (10),
dans laquelle
il est prévu un moyen d'obturation qui, dans la position d'écoulement entrant des clapets (11, 12), referme une zone (18) entre le premier clapet (11) et le second clapet (12), qui est délimitée par les clapets (11, 12),
**caractérisée en ce que**
le premier clapet (11) est agencé sur un moyen de pivotement (28) qui est monté mobile en pivotement dans le cadre (13) de la soupape (10), et dans la position d'écoulement entrant des clapets (11, 12), le premier clapet (11) est en appui contre le second clapet (12) pour refermer la zone (18).

3. Soupape selon la revendication 1, **caractérisée en ce que** le moyen de pivotement (28) comprend deux bras porteurs (29) montés mobiles en pivotement sur le cadre (13).

4. Soupape selon la revendication 2 ou 3, **caractérisée en ce qu'à** une extrémité libre du moyen de pivotement (28), le premier clapet (11) est agencé sur un premier palier (16a) et le second clapet (12) est agencé sur un second palier (16b).

5. Soupape selon l'une des revendications précédentes, **caractérisée en ce qu'il** est prévu un moyen de positionnement (31) permettant de positionner les clapets (11, 12) et/ou le moyen de pivotement (28) dans une position de sortie et une position d'entrée.

6. Soupape selon l'une des revendications précédentes, **caractérisée en ce que** les clapets (11, 12) et/ou le moyen de pivotement (28) sont réglables en sens opposés et/ou dans le même sens par le moyen de positionnement (31).

7. Soupape selon la revendication 1, **caractérisée en ce que** le second clapet (12) est mobile en translation par un organe de positionnement (30).

8. Soupape selon la revendication 1, **caractérisée en ce que** le premier clapet (11) est monté à distance d'une arête avant d'un cadre (13) et le second clapet (12) est monté sur une arête arrière du cadre (13).
